# EUROPEAN PATENT APPLICATION

(11) **EP 4 837 891 A1**
(43) Date of publication of application: **11.11.2026**
(21) Application number: 25175398.4
(22) Date of filing: 09.05.2025
(51) Int. Cl.: C04B 28/14, C04B 38/02, C04B 20/10

(54) **WATER-GYPSUM-DISPERSION COMPRISING PARTIALLY HYDROPHOBIZED PARTICLES**

(71) Applicant: PTA Solutions GmbH, 80802 München (DE)
(72) Inventor: GONZENBACH, Thomas, 8107 Schweiz (CH); REICH, Patrick, 80802 München (DE); STURZENEGGER, Philip Noah, 8117 Fällanden (CH)
(74) Representative: Bardehle Pagenberg Partnerschaft mbB Patentanwälte Rechtsanwälte

(57) **Abstract**

The present invention relates to a water-gypsum-dispersion comprising gypsum, a foam formation system comprising a solid particulate composition and at least one chemical blowing agent, water, optionally one or more additives. The gypsum particles are dispersed in the water. A unique microstructure is achieved using partially hydrophobized particles with specific amphiphilic molecules on their surface. The present invention also relates to a method for producing a gypsum body comprising the steps of preparing a water-gypsum-dispersion by mixing gypsum with water, a foam formation system and optionally additives, casting the water-gypsum-dispersion on a conveyor-belt or casting the water-gypsum-dispersion in a hollow mold, hardening the water-gypsum-dispersion to a gypsum body on the conveyor belt or in the hollow mold, and drying the gypsum body. The invention further provides a use of a water-gypsum-dispersion for the production of a foamed gypsum body.

## Description

### Technical field of the invention

The present invention relates to a water-gypsum-dispersion comprising calcined gypsum, a foam formation system comprising a solid particulate composition and at least one chemical blowing agent, water and optionally one or more additives, wherein the gypsum particles are dispersed in the water. The present invention further provides a method for producing a gypsum body. The invention also provides a use of a water-gypsum-dispersion for the production of a foamed gypsum body.

### Background of the invention

Gypsum is a material used in building surface products such as gypsum panels. Gypsum is inexpensive and readily available. Furthermore, gypsum can be formed to useful shapes by for example casting, molding, plastic modelling or other means. One useful application is the use of gypsum panels to form interior walls. These gypsum panels or plasterboards include a gypsum body sandwiched between facing sheets typically made of cardboard or paper.

The gypsum core can be a foamed gypsum with a distribution of pores in the gypsum body. The pores help to reduce the weight of the gypsum boards, thereby making the panel lighter and easier to handle. The pores further help to save raw materials, and the energy and CO2 emissions associated with raw material production. In addition, the pores lead to energy savings in the manufacturing process, for example during drying. Finally, the reduced density is the cause for energy savings during transportation and installation. To ensure that the mechanical properties of the gypsum panel, such as mechanical strength, are sufficient for the application it is important to control the size of the pores and the distribution as both can impact not only the weight but also the mechanical properties of the gypsum board.

Mineral foams combine unique properties like low specific weight, thermal, electrical, acoustic insulation, they can exhibit high specific strength and depending on the chemical composition extraordinary thermal and chemical stability. In addition, foam formation is an efficient strategy to save raw materials and reduce the weight of components.

For the production of foamed mineral products, it is important to control the microstructure of the foam while balancing other material properties like strength, density or weight providing improved methods for producing mineral foams with optimized microstructure.

EP 3 347 329 B1 discloses foamed construction materials, such as cement. The foamed construction materials are produced using a ready-to-use product in the form of a solid particulate composition. The ready-to-use product impacts the foam's performance and functionality.

As an alternative the use of surfactants for gypsum slurries is known. However, the generated foam is stable for only a very short time span (see Maurizio Bellotto "Interactions between admixtures in wallboard production", Global Gypsum, 16 November 2012; Retrieved from https://www.usg.com/content/dam/USG_Marketing_Communications/united_states /product_promotionaLmaterials/finished_assets/usg-hydrocal-A-11-Gypsum-Cement-Submittal-en-IG1390.pdf).). The final pore size cannot well be tuned although this is crucial to ensure defined board properties, in particular board strength. Admixing the foam introduces excess water to the slurry that adds to the energy consumption and CO₂ emission of the drying process and reduces mechanical strength. The slurry is formed using one mixer, thus, the dispersion of the gypsum particles in water and the process of rendering the gypsum slurry porous cannot be controlled independently of each other.

It is an object of the present invention to overcome these drawbacks of the prior art and to provide a water-gypsum-dispersion that allows reliable foam formation with controlled porosity and controlled pore size. In particular, it is an aim of the present invention to increase process robustness and product reliability and to enable foam formation adjustable to the continuous gypsum board production.

### Summary of the invention

These objectives are achieved by the water-gypsum-dispersion as defined in claim 1, the method as defined in claim 10 and the use as defined in claim 12.

Further aspects of the invention are disclosed in the specification and the dependent claims.

In a first aspect, the invention relates to a water-gypsum-dispersion comprising
- 50 - 75 % by wt. gypsum, preferably calcined gypsum,
- a foam formation system comprising a solid particulate composition and at least one chemical blowing agent,
- water,
- optionally one or more additives.

The gypsum particles and the solid particulate composition are dispersed in the water. The solid particulate composition comprises
(a) catalytically active particles, and
(b) partially hydrophobized particles,

Wherein the catalytically active particles are selected to react with the chemical blowing agent to form a gas, and
- wherein the partially hydrophobized particles (b) are selected from the group consisting of oxides, hydroxides, carbides, sulfates, nitrides, phosphates, carbonates, silicates (b.1), and
- wherein the partially hydrophobized particles (b) are obtained by modifying the surface of particles (b.1) with amphiphilic molecules (b.2) comprising at least a head group and a tail group, and the amount of amphiphilic molecules (b.2) on the particles (b.1) is in the range of 0.5 - 160 µmol (b.2) / m² particle (b.1),
wherein the amount of the partially hydrophobized particles (b) in the solid particulate composition is in the range of 20.0-99.8% and/or the amount of the catalytically active particles (a) is in the range of 0.2-80.0%, preferably the amount of (b) is in the range of 60.0-99.8% and/or the amount of (a) is in the range of 0.2-40.0%, most preferably the amount of (b) is in the range of 70.0-99.8% and/or the amount of (a) is in the range of 0.2-30.0%.

The tail group of the amphiphilic molecules (b.2) is selected from saturated and unsaturated aliphatic groups having 2 to 18 carbon atoms, preferably 8 to 18 carbon atoms, particularly preferably 9 to 17 carbon atoms, and
- the head group of the amphiphilic molecules (b.2) is selected from sulfates and carboxylic acids and sulfate salts and quaternary ammonium compounds and carboxylic acid salts.

In another aspect, the invention relates to a method for producing a gypsum body comprising the steps of
- preparing a water-gypsum-dispersion according to the invention by mixing calcined gypsum with water, a foam formation system and optionally additives,
- casting the water-gypsum-dispersion on a conveyor-belt or casting the water-gypsum in a hollow mold,
- hardening the water-gypsum-dispersion to a gypsum body on the conveyor belt or in the hollow mold and
- drying the gypsum body.

In another aspect, the invention relates to the use of a water-gypsum-dispersion according to the invention for the production of a foamed gypsum body, preferably for the production of gypsum cores and plaster boards and wall elements.

### Detailed description of the invention

### Definitions

Unless otherwise stated, the following definitions shall apply in this specification:
The term "dispersion" is used to mean a system in which particles of one substance are distributed throughout another substance. Water or an aqueous solution acts as the continuous phase or dispersing medium in which other particles are dispersed.

The terms "comprise" and "comprising" are used in the inclusive, open sense, meaning that additional elements may be included. It is not intended to be construed as "consists of only".

Throughout this specification unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "included but not limited to". "Including" and "including but not limited to" are used interchangeably.

The terms "consist of" and "consisting of" are used, when no further elements are present in the product apart from the ones following said wording.

All percentages hereinafter refer to weight percentage, i.e. % by weight, unless otherwise defined.

### Gypsum

The gypsum included in the water-gypsum-dispersion can be anhydrous gypsum or hemihydrates, which are typically added as a powder. Stucco can also be used.

Gypsum powder is understood here to be a quantity of gypsum particles, which preferably have a median diameter of 0.2 - 45 micrometers.

The gypsum body comprises a porous gypsum-based material. In this context, gypsum is understood to mean the mineral CaSO4 *2H₂O, generally as dihydrate in the finished gypsum body. In addition to gypsum, the gypsum body may also contain other substances, e.g. other inorganic materials such as minerals like quartz, aluminum oxide, aluminum hydroxide, magnesium hydroxide, calcium carbonate, unexpanded perlite or vermiculite or clay.

To prepare the gypsum for use in the dispersion crushed natural gypsum or synthetic gypsum like REA gypsum can be heated or calcined to dehydrate the feedstock. The gypsum for the use in the dispersion may contain 0.5 - 80.0% or 1 - 50% or 1 - 20% of calcined recycled gypsum, stemming from sources like recycled gypsum boards or any other source that is suited for recycling.

The water-gypsum-dispersion, which is also referred to as a gypsum slurry, comprises 50 -75 % by wt. of gypsum, preferably calcined gypsum, preferably 55 - 75 % by wt. of gypsum, and more preferably 55 - 68 % by wt. of gypsum, and alternatively 50 - 66 % by wt. of gypsum.

The percentage of the mass of all sulfate compounds, like for example anhydrous calcium sulfate, calcium sulfate hemihydrate, calcium sulfate dihydrate, is at least 70%, preferably at least 80%, based on the total weight of gypsum used for the preparation of the water-gypsum-dispersion.

### Foam formation system

The water-gypsum-slurry comprises a foam formation system. The foam formation system comprises a solid particulate composition and at least one chemical blowing agent. The foam formation system may be a 2-component system or a one component system. If the foam formation system is a 2-component system one component may be the solid particulate composition and the second component may be a blowing agent. The blowing agent may be present in liquid form.

The solid particulate composition comprises (a) catalytically active particles and (b) partially hydrophobized particles, wherein the catalytically active particles (a) are selected to react with the chemical blowing agent to form a gas.

The amount of (b) partially hydrophobized particles in the solid particulate composition is in the range of 20.0-99.8% and/or the amount of (a) catalytically active particles in the solid particulate composition is in the range of 0.2-80%.

The foam formation system is present in the water-gypsum-dispersion in an amount of preferably between 0.1 % by wt. to 20.0 % by wt., preferably between 0.2 % by wt. to 12.0 % by wt., more preferably between 0.2 % by wt. to 6.0 % by wt., and even more preferably between 0.5 % by wt. to 3.0 % by wt., based on the total weight of the water-gypsum-dispersion.

Expressed in percent per volume of the water-gypsum-dispersion, the foam formation system is present in the water-gypsum-dispersion in an amount of between 0.1 vol% to 15.0 vol%, preferably 0.2 - 10.0 vol%, and more preferably 0.4 - 7.0 vol%.

The foam formation system or one component of the foam formation system, the solid particulate composition, can be a powder, preferably with a particle size from 30 nm to 500 µm, more preferably 30 nm to 300 µm, more preferably 100 nm to 100 µm, and even more preferably 500 nm to 50 µm and most preferably 500 nm to 20 µm or the foam formation system or the solid particulate composition of the foam formation system can be a granulate, preferably with a particle size from 0,5 mm - 20 mm.

Good foams can be obtained with narrow as well as with broad particle size distribution.

The foam formation system or one component of the foam formation system is dispersed in the dispersing medium. The water-gypsum-dispersion is foamed by decomposition of the blowing agent.

The solid part of the foam formation system is preferably a powder. As it is a dry, homogeneous substance, it is stable and exhibits long shelf life.

In case the blowing agent is not stable if stored together with the catalytically active particles, the foam formation system may be provided in a 2-component configuration in which all components are stable and exhibit long shelf life.

The foam formation system is dispersed in the dispersing medium and subsequently foamed by decomposition of the blowing agent.

### Catalytically active particles

The foam formation system includes a solid particulate composition. Component (a) of the solid particulate composition are catalytically active particles. The catalytically active particles (a) are selected to react with the chemical blowing agent to form a gas.

The catalytically active particles (a) are selected from the group consisting of metal oxides, metal hydroxides, metal carbonates, metal salts, enzymes or a mixture thereof, preferably selected from the group consisting of manganese oxides, iron oxides, alkali metal manganates, enzymes, permanganates, alkali metal halides, and mixtures thereof.

In one embodiment the catalytically active particles consist of one catalyst. The catalyst is preferably selected from manganese oxide, either synthetically produced MnO2 or naturally occurring mineral MnO2, manganite MnO(OH), calcium manganese (VII) compounds, potassium manganese (VII) compounds and sodium manganese (VII) compounds.

In another embodiment the catalytically active particles are a mixture of a first catalyst with a second co-catalyst, wherein the first catalyst is a metal oxide, a metal hydroxide, a metal carbonate, a metal salt, an enzyme or a mixture thereof selected from the group consisting of manganese oxides, enzymes and mixtures thereof, and the second co-catalyst is selected from the group consisting of permanganates, alkali metal halides, enzymes and mixtures thereof. The co-catalyst is present in an amount of 0.5 % by wt. to 80.0 % by wt., preferably in an amount of 2 % by wt. to 75 % by wt., more preferably in an amount of 2 % by wt. to 60 % by wt., based on the total amount of the catalytically active particles. The first catalyst is different from the second co-catalyst.

If a second co-catalyst is used, it is preferably selected from the group consisting of potassium permanganate, potassium iodide, catalase, more preferably catalase from Micrococcus lysodeikticus, sodium permanganate, ammonium permanganate, calcium permanganate, magnesium permanganate and mixtures thereof, and more preferably the second co-catalyst is calcium permanganate, potassium permanganate, sodium permanganate, potassium iodide or catalase.

In one preferred embodiment the foam formation system comprises between 3 to 65 % by wt. of the first catalyst, between 0.2 to 40 % by wt. of the second co-catalyst and between 30 and 95 % by wt. of the blowing agent, wherein the components first catalyst, second co-catalyst and blowing agent add up to 100 % by wt.. Preferably, the foam formation system comprises between 5 to 35 % by wt. of the first catalyst, between 4 to 35 % by wt. of the second co-catalyst and between 59 and 90 % by wt. of the blowing agent. Even more preferably, the foam formation system comprises between 6 to 22 % by wt. of the first catalyst, between 4 to 30 % by wt. of the second co-catalyst and between 64 and 90 % by wt. of the blowing agent.

In a further advantageous embodiment, the invention relates to a composition wherein the amount of the catalytically active particles in the water-gypsum-dispersion is in the range of between 0.01 to 2.00 % by wt., preferably 0.01 to 1.00 % by wt., more preferably 0.03 to 0.50 % by wt. in respect to the total weight of the water-gypsum-dispersion.

### Partially hydrophobized foam stabilizing particles

The term "partially hydrophobized" relates to a solid material in particulate form where the particle's surface is modified with amphiphilic molecules. Such modification aims at reducing the hydrophilic properties of the particles in a controlled manner to engineer the wetting properties of the particles such that maximum foam stability is achieved. The partially hydrophobized foam stabilizing particles (b) are referred to as partially hydrophobized particles herein. The partially hydrophobized particles (b) are obtained by modifying the surface of particles (b.1) with amphiphilic molecules (b.2) comprising at least a head group and a tail group. The partially hydrophobized particles (b) are particles (b.1) having a modified surface, which is modified with amphiphilic molecules (b.2) comprising at least a head group and a tail group. The amphiphilic molecules (b.2) adhere to the surface of particles (b.1) resulting in partially hydrophobized particles (b).

The particles (b.1) are selected from the group consisting of oxides, hydroxides, carbides, sulfates, nitrides, phosphates, carbonates and silicates. The surface of the particles (b.1) is modified with amphiphilic molecules (b.2) comprising at least a head group and a tail group. The tail group of the amphiphilic molecules (b.2) is selected from saturated and unsaturated aliphatic groups having 2 to 18 carbon atoms, preferably 8 to 18 carbon atoms, particularly preferably 9 to 17 carbon atoms, 9 to 15 carbon atoms, or even 9 to 11 carbon atoms, and the head group of the amphiphilic molecules (b.2) is selected from sulfates, sulfate salts, quaternary ammonium groups, carboxylic acids and carboxylic acid salts.

In one embodiment the amphiphilic molecules (b.2) are selected from saturated or monounsaturated fatty acids having 10 to 18 carbon atoms, fatty acid salts having 10 to 18 carbon atoms and alkyl sulfate salts having an aliphatic alkyl group with 8 to 18 carbon atoms. The fatty acid salts are preferably sodium salts. The alkyl sulfate salts are preferably sodium alkyl sulfates, potassium alkyl sulfates and ammonium alkyl sulfates.

In a preferred embodiment the amphiphilic molecules (b.2) are selected from fatty acids including oleic acid, decanoic acid, undecanoic acid, dodecanoic acid, hexadecenoic acid and octadecanoic acid, fatty acids salts including sodium oleate, and fatty acid sulfates and fatty acid ether sulfates including sodium lauryl sulfate, sodium lauryl ether sulfate, sodium lauryl monoether sulfate. Most preferably the amphiphilic molecules (b.2) are selected from oleic acid, sodium oleate, sodium lauryl sulfate, sodium lauryl ether sulfate, sodium lauryl monoether sulfate, hexadecenoic acid and octadecanoic acid.

In a further preferred embodiment, the amphiphilic molecules (b.2) are selected from decanoic acid, undecanoic acid, and dodecanoic acid.

In a further preferred embodiment, the amphiphilic molecules (b.2) are selected from decanoic acid, undecanoic acid, dodecanoic acid, hexadecenoic acid, and octadecanoic acid.

In a particularly preferred embodiment, the amphiphilic molecules (b.2) are selected from oleic acid, sodium oleate or decanoic acid.

In another embodiment the amphiphilic molecules (b.2) are selected from quaternary ammonium compounds having 10 to 18 carbon atoms, preferably 12 to 16 carbon atoms, in the main chain. A preferred quaternary ammonium compound is cetyltrimethylammonium bromide (CTAB), with the IUPAC name N,N,N-Trimethylhexadecan-1-aminium bromide.

The amount of amphiphilic molecules (b.2) on the particles (b.1) is in the range of 0.5-160 µmol (b.2) / m² particle (b.1), preferably 1 - 56 µmol (b.2) / m² particle (b.1) more preferably 1 - 28 µmol (b.2) / m² particle (b.1) and even more preferably 3.5 - 28 µmol (b.2) / m² particle (b.1).

According to one aspect, the critical micelle concentration of the amphiphile used is therefore typically greater than 10, preferably greater than 100 µmol/l. According to a further aspect, the solubility of the amphiphile in water is greater than 1 µmol/l.

According to one aspect, the partially hydrophobized particles (b) are previously hydrophobized particles. This means that the particles (b.1) get partially hydrophobized before they are added to a dispersing medium.

According to a preferred aspect, the concentration of the partially hydrophobized particles in the water-gypsum-dispersion is 0.05 to 10.00 %, preferably 0.1 to 7.0 %, particularly preferably 0.1 - 4.0 %, or even 0.1 - 1.0 %.

According to a preferred aspect, the median diameter of the partially hydrophobized particles is 0.02 - 20.00 µm, preferably 0.03 - 10.00 µm, more preferably 0.05 - 5.00 µm, and particularly preferably 0.1 - 5.0 µm. Preferably, the partially hydrophobized particles have an average aspect ratio (ratio of longest to shortest diameter) of less than 5, preferably less than 3, particularly preferably less than 2.

The nature of the particles (b.1) will depend on the properties of the suspension that is to be foamed and the intended end use of the foam to be formed and particularly includes inorganic materials. Accordingly, the term includes the following exemplary inorganic materials:
- Oxides, including pure and mixed metal oxides, particularly aluminum oxide, silicon dioxide, spinels, cerium-gadoliniumoxide, zirconium oxide, magnesium oxide, tin oxide, titanium oxide and cerium oxide;
- Hydroxides, particularly aluminum hydroxide, calcium hydroxide, magnesium hydroxide, very particularly aluminum hydroxide;
- Carbides, particularly silicon carbide, boron carbide;
- Nitrides, particularly silicon nitride, boron nitride;
- Phosphates, particularly calcium phosphates, such as tricalciumphosphate, hydroxyapatite;
- Carbonates, particularly nickel carbonate, calcium carbonate, such as ground limestone or precipitated calcium carbonate, magnesium carbonate;
- Silicates, particularly silicon dioxide, silica fume, fly ash, quartz, ground glasses, slag, calcium silicates, mullite, cordierite, clay minerals like kaolin or bentonite, zirconium silicate, zeolites, diatomaceous earth, very particularly silica fume, clay minerals, zirconium silicate; specifically clay minerals;
- Sulfates, particularly calcium sulfate.

In a further embodiment, the term includes oxides, including pure and mixed metal oxides, selected from the group consisting of aluminum oxides, including Al-Mg spinels, silicon dioxides, zirconium dioxides, and zinc oxides, particularly aluminum oxide, silicon dioxide, and zirconium dioxide.

In a further embodiment, the particles (b.1) are selected from the group of aluminum oxide, silicon dioxide, and calcium carbonate.

In a further embodiment, the particles (b.1) are selected from the group of aluminum hydroxide, boehmite, silicon dioxide, and aluminum oxide.

In a further embodiment, the particles (b.1) are selected from the group of calcium hydroxide, magnesium hydroxide, and aluminium hydroxide.

In a further embodiment, the particles (b.1) are selected from the group of zirconium silicate, ground glass, calcium carbonate, and kaolin.

In a further embodiment, the particles (b.1) are selected from the group of calcium aluminate hydrate, calcium silicate hydrate, and ettringite.

In a further embodiment, the particles (b.1) are selected from calcium sulfate hemihydrate or calcium sulphate dihydrate.

In a further embodiment, the particles (b.1) are selected from calcium aluminate, calcium silicate, or calcium sulfoaluminate.

In a further embodiment, the particles (b.1) are selected from synthetic or naturally occurring calcium carbonate.

In a further embodiment, the particles (b.1) are selected from the group of titanium dioxide, silicon carbide, and silicon nitride.

In a further embodiment, the particles (b.1) are selected from the group of kaolin, kaolinite, bentonite, magnesium carbonate, and calcium carbonate.

Such inorganic materials may be synthetic materials or naturally occurring minerals. Multi-component compositions comprising mixtures of two or more of the above mentioned compounds of the same or different kind may also be used.

### Blowing Agent

The foam formation system further comprises a chemical blowing agent. The blowing agent is a substance that can be decomposed to release a gas, creating bubbles within the material.

The chemical blowing agent is preferably selected from hydrogen peroxide (H₂O₂), peroxo compounds which release oxygen in the presence of a catalyst, alkali metal peroxides, alkaline earth metal peroxides, carbonates and hydrogen carbonates, preferably selected from hydrogen peroxide, sodium carbonate and sodium hydrogen carbonate.

If the blowing agent is hydrogen peroxide, all amounts given herein refer to an aqueous peroxide solution containing 50 % by wt. of hydrogen peroxide.

The blowing agent decomposes to release a gas and, in presence of partially hydrophobized particles (b), to form a foam. This means that macropores in the gypsum body are formed by a foaming process. The catalyst is added to the foam formation system to decompose the peroxide or other chemical blowing agents.

### Preparation of the solid particulate composition of the foam formation system

The solid particulate composition can be prepared by different methods.

In one embodiment, the solid particulate composition is prepared by blending particles (b.1), amphiphilic molecules (b.2) and catalytically active particles (a) plus optionally additional additives in a suitable apparatus until a homogeneous mix is achieved. Accordingly, the method comprises the step of combining the raw materials in the appropriate amounts to obtain the solid particulate composition as described herein. The combination of the raw materials may be accomplished by known methods. A suitable method includes supplying the raw materials to a ball mill and blending the materials for a prolonged period of time. A suitable mixing time is from 1 - 100 hrs, preferably 12 - 24 hrs or alternatively 2 - 16 hrs. In an advantageous embodiment, the method is performed dry, i.e. without adding solvents to the mixture.

In another embodiment, the solid particulate composition is prepared in-situ during the production of the water-gypsum-dispersion. The particles (b.1) and the amphiphilic molecules (b.2) are blended to prepare partially hydrophobized particles (b). The partially hydrophobized particles (b) and the catalytically active particles (a) are added to the gypsum powder and/or the water without premixing them. Thus, the solid particulate composition is formed during mixing with the gypsum powder and/or the water.

### Additives

The water-gypsum-dispersion may comprise one or more additives. The additives are preferably selected from the group consisting of pH adjusting agents, additives for mechanical reinforcement, fire retardants, dispersing agents, additives against positive or negative thermal expansion, additives to delay or accelerate the setting reaction and/or additives to reduce the setting expansion of gypsum.

Additives include accelerators and retarders to setting reactions of hydratable materials. Examples for accelerators of the hydration reaction include calcium sulfate dihydrate, calcium salts, such as calcium chloride and calcium nitride, lithium salts, lithium hydroxide and triethanol amin. Examples for retarders of the hydration reaction include citric acid, cellulose, retardants, sugars, tartaric acid and its salts.

Additives further include pH adjusting agents. Suitable pH adjusting agents for pH control include hydrochloric acid, nitric acid, alkali metal hydroxides, such as sodium hydroxide (NaOH) or potassium hydroxide (KOH), ammonia, and triethanolamine, Portland cement or similar suitable substances.

Additives further include dispersing aids, for example polycarboxylic ethers, melamine sulfonate, naphthalene sulfonate and lignin sulfonates.

Additives further include rheology modifiers, for example cellulose and cellulose derivatives, polyvinyl alcohol, polyethylene imine, polyethylene oxide, polyethylene glycol, xanthan gum, bentonite, microsilica and fine calcium carbonates.

In a further advantageous embodiment, the invention relates to a composition wherein the amount of the one or more additives is in the range of 0 - 8 %, preferably 0 - 4 %, more preferably 0 - 2 %, or even 0 - 1 %, in respect to the water-gypsum-dispersion.

### Water-gypsum-dispersion

The water-gypsum-dispersion according to the invention is a dispersion. The dispersion is a system in which gypsum particles are distributed throughout water or an aqueous solution, which acts as the continuous phase. In particular, the water-gypsum-dispersion is a suspension. In this type of dispersion, the gypsum particles are dispersed in water, but they are large enough to eventually settle out over time if left undisturbed. This makes it a heterogeneous mixture, where the solid particles are not dissolved but suspended in the liquid medium water.

In one embodiment, the amount of gypsum, partially hydrophobized particles, catalytically active particles, blowing agent, water and additives sum up to 100%.

In one embodiment the water-gypsum-dispersion consists of
- 50 - 75 % by wt. calcined gypsum,
- a foam formation system comprising the particulate composition, and at least one blowing agent,
- water,
- optionally one or more additives,
wherein the components add up to 100 % by wt..

For preparing the water-gypsum-dispersion, gypsum, preferably calcined gypsum, is mixed with water, one or more components of the foam formation system, preferably the solid particulate composition of the foam formation system, and optionally additives to form a dispersion. Based on the setup of the process the components of the foam formation system are added in several steps or simultaneously.

According to one aspect, the amount of water in the water-gypsum-dispersion is 30%-140%, preferably 30%-100% of the dry weight of all solids added. According to a further aspect, the amount of water added is 30%-140%, preferably 30%-100% of the dry weight of the gypsum powder.

According to one aspect, the dispersion to be processed has a pH value of 6 - 10, preferably 6 - 8, particularly preferably 6.8 - 7.4.

As used herein, water is generally to be understood as a water-based liquid, which may also contain other additives, such as pH regulating agents, retarders, or liquefiers. The water may be purified water, distilled water, or tap water.

The gypsum body produced from the water-gypsum-dispersion according to the invention contains the remains and/or chemical products of the catalytically active particles (a) after reaction with the blowing agent, the partially hydrophobized particles (b) with the amphiphilic molecules (b.2), and the additives.

The pore structure of the foamed gypsum body is formed during decomposition of the blowing agent in presence of the partially hydrophobized particles (b) in the water-gypsum-dispersion before the gypsum dispersion sets and turns into a solid. The foam formation depends on several aspects, one important aspect is the foam formation system according to the invention which has a direct impact on the foam structure. Particularly important are the partially hydrophobized particles (b) of the foam formation system.

The nature and influence of the partially hydrophobized particles is explained in more detail based on the figures:
Figure 1 is a schematic representation of a partially hydrophobized particle;
Figure 2 schematically illustrates the principle of foam stabilization by means of partially hydrophobized particles.

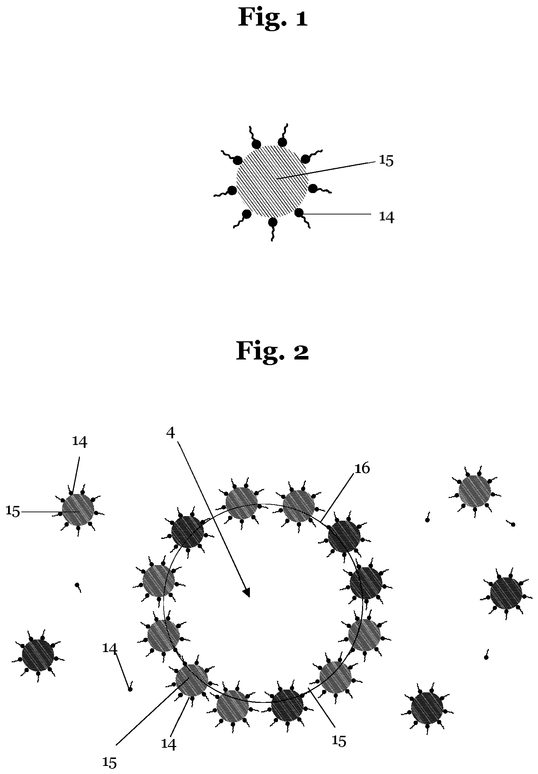

As shown in Figure 1, the particles (b.1), 15, are partially hydrophobized by the amphiphilic molecules (b.2), 14 forming a single-molecular layer around the particles 15. Here, the hydrophilic head groups of the amphiphilic molecules 14 are directed towards the particles 15, and the hydrophobic tail groups are directed away from the particles 15. As a result, the hydrophobic tails form a hydrophobic layer enveloping particles 15, which causes the partial hydrophobization of the particles 15. Partial hydrophobization means that the water-based solvent - gas interface forms a contact angle of 55-85° at the contact line of the respective particle at the time of foam formation and as long as the foam is in the wet state.

Figures 1 and 2 schematically show the stabilization of an air bubble 4 in the foam by partially hydrophobized particles. In Figure 1, particles 15 are partially hydrophobized by amphiphiles 14: The amphiphiles 14 form a single-molecular layer around the particle 15, whereby the hydrophilic head of the amphiphiles 14 is directed towards the particle 15 and the hydrophobic tail is directed away from the particle 15. The extent of partial hydrophobization and therefore the wetting properties of the particles are determined by the concentration of amphiphilic molecules per m² of the surface of the particles 15.

Figure 2 shows that the partially hydrophobized particles 15 are attached to the gas-water or gas-slurry interface 16. The particle-decorated interface surrounds the gas bubble 4 of the foam as a wall and thus reduces the surface area of the water-based solvent - gas or slurry - gas interface. The bubble 4 is effectively stabilized by the resulting reduction in free energy and by the robust shell of the partially hydrophobized particles 15.

In Figure 2, particles that are not located at the interface are also at least partially hydrophobized. All or only some of the particles can be hydrophobized. In the latter case, the partially hydrophobized particles 15 preferentially, but not necessarily always, accumulate at the water-based solvent - gas or slurry - gas interface.

The mechanism of particle stabilization differs fundamentally from the stabilization of foam, e.g. by means of surfactants, as described in EP 2045227 A1. The surfactants reduce the free energy per unit area of the water-based solvent - gas interface by reducing the surface tension of the water-based solvent - gas interface. In contrast, stabilization according to the invention reduces the area of the energetically unfavorable water-based solvent - gas interface itself by replacing part of this interface with the energetically more favorable gas - partially hydrophobized particle and partially hydrophobized particle - water based solvent or -slurry interfaces (Figure 2).

A further advantage of the partially hydrophobized particles is that the thermal energy is too low by orders of magnitude to remove particles from the interface once they have attached to it. Once particles have adsorbed to the interface, they practically do not desorb. Particle stabilization is so efficient that dewatering, coalescence and Ostwald ripening can almost completely be prevented.

In contrast, the energy gain associated with the adsorption of an interfacially active molecule (surfactant) at the air-water interface is in the range of the thermal energy. Therefore, molecules such as surfactants are subject to an adsorption-desorption equilibrium at the interface. Due to these dynamics in the system, the thermodynamically favored decomposition processes of a foam progress steadily. Data showing how strongly surfactant-stabilized foams degrade due to bubble growth and drainage already within the first 5 min after foam generation are plotted elsewhere (see Maurizio Bellotto "Interactions between admixtures in wallboard production", Global Gypsum, 16 November 2012; Retrieved from < Interactions between admixtures in wallboard production>). These differences have far-reaching consequences for the stability of the foam and for components made from it, as the properties of porous materials are largely determined by their pore structure.

### Preparation of a foamed gypsum body

According to a first embodiment, the water-gypsum-dispersion is produced by first preparing the solid particulate composition. Particles (b.1) are placed in a mixing vessel. Catalytically active particles (a) and the amphiphilic molecules (b.2) are added, as well as optionally a second co-catalyst and optionally one or more additives. The components are mixed until homogeneous. The mixing vessel is, for example, a ball mixer with ceramic balls or a plowshare mixer. The result is a dry mixture; although the amphiphilic molecules may be liquid, the quantity added is too small to produce a paste or similar. The product, which is one component of the foam formation system, is then removed from the mixing vessel and processed further. It can either be premixed with the gypsum powder in a dry mixer or added directly to the mixing water during suspension production, either before, during, or after addition of the gypsum powder.

This is followed by suspension production and foam production. For this purpose, mixing water is placed in a container. Gypsum and the solid particulate composition are added and stirred with a suitable stirring device until a homogeneous suspension is produced. The stirring time depends on the efficiency of the stirring tools, typical mixing times are e.g. 1 to 2 minutes. The blowing agent is added to the homogeneous suspension and the suspension is further homogenized, thus forming the foam formation system. Only short homogenization times of e.g. a few seconds are necessary. Once the blowing agent is sufficiently well homogenized into the water-gypsum-dispersion, the gypsum slurry is poured into a mold or onto a conveyor belt.

According to a further embodiment for producing the water-gypsum-dispersion, the solid particulate composition is produced in-situ. In a first step, particles (b.1) are placed in a mixing vessel. The amphiphilic molecules (b.2) are added. The components are mixed until a homogeneous mixture is achieved. The result is a dry mixture; although the amphiphilic molecules may be liquid, the quantity added is too small to produce a paste or similar. The partially hydrophobized particles (b) are then removed from the mixing vessel and processed further. The particles (b) can either be premixed with the gypsum powder in a dry mixer or added directly to the mixing water during suspension production.

In a next step, gypsum powder, the partially hydrophobized particles (b) from the first step and catalytically active particles (a), and optionally one or more additives, are added to a mixing vessel. The components are dry-mixed until they are homogeneous, resulting in a dry pre-mixture. Mixing takes place in a suitable mechanical mixer such as, for example, a mortar mixer or plowshare mixer.

This is followed by suspension and foam production. For this purpose, mixing water is placed in a container. If a co-catalyst is used, this can be added to the mixing water together with any other additives such as retarders or liquefiers; the mixture is homogenized until the added substances are dissolved. The dry pre-mixture is added to the mixing water or the water mixture and stirred with a suitable stirring device until a homogeneous suspension is formed. The blowing agent is added to the homogeneous suspension and homogenized further to form the foam forming system. Only short homogenization times of e.g. a few seconds are necessary. Once the blowing agent is sufficiently well homogenized into the water-gypsum-dispersion, the gypsum slurry (expanding suspension) is poured into a mold or onto a conveyor belt.

### Method for producing a gypsum body

One aspect of the invention relates to a method for producing a gypsum body comprising the steps of
- preparing a water-gypsum-dispersion according to the invention by mixing in arbitrary order gypsum, preferably calcined gypsum with water, a foam formation system and optionally additives,
- casting the water-gypsum-dispersion on a conveyor belt or casting the water-gypsum-dispersion into a hollow mold,
- hardening the water-gypsum-dispersion to a foamed gypsum body on the conveyor belt or in the hollow mold and
- drying the gypsum body.

The term conveyor belt includes one or more conveyor belts and/or conveyor belts which are part of a conveyor line.

In one embodiment the method is used to produce gypsum plasterboards. A water-gypsum-dispersion is prepared as described herein. The dispersion is fed between continuous layers of paper on conveyor belt(s), which can be part of a conveyor line.

As the wet gypsum board travels the length of a conveyor belt or conveyor line, the calcium sulfate hemihydrate combines with the water in the slurry to form solid calcium sulfate dihydrate, or gypsum, resulting in a rigid board. The paper becomes chemically and mechanically bonded to the gypsum body, which forms the core. The gypsum board is then cut to length and conveyed through dryers to remove any free moisture. The gypsum board may be dried by direct contact with hot combustion gases or by indirect steam heating.

The conveyor belt can have a belt speed of 30 to 120 meters per minute, preferably 60 - 100 meters per minute.

The production of gypsum bodies, especially gypsum plaster board using a conveyor belt, is a continuous process, therefore, the reaction speed of the agents of the foam formation system is important. This is different from the manufacturing of other foamable materials which are produced in a batch process. The foam formation system needs to assure close to 100% gas release, for example 98% of gas release, and the stabilization of the gas in the water-gypsum-dispersion in the shape of small bubbles within a short time interval of 1 - 60 s, preferably 1 - 30 s, more preferably 1 - 10 seconds, and even more preferably within 1 - 5 s. Thus, using the water-gypsum-dispersion according to the invention, a high speed of the conveyor belt is possible while a stable wet foam is produced. Due to the nature of the partially hydrophobized particles, stable and even sized bubbles are formed which leads to a gypsum material with a uniform microstructure and defined properties even if produced at high speed.

The gypsum body produced according to the invention comprises a proportion of inorganic material of at least 90%, preferably of at least 96%, and particularly preferably of at least 99% or even 99.5%.

Various operating parameters influence the characteristics of the gypsum body that is formed from the water-gypsum-dispersion. For example, the weight percent of each of the constituents of the dispersion influence the characteristics of the gypsum body. The volume of the macropores within the set gypsum body be determined, in part, based on the quantity of foam formation system that is added to the slurry. It can even be stated that the volume of the macropores within the set gypsum body is determined by the composition and quantity of the foam formation system that is added to the slurry.

The preparation of the water-gypsum-dispersion may include several steps. In a first step, the gypsum powder is prepared and dispersed in water. The water may already contain other additives e.g. any additives described herein and/or be mixed with other liquids. The gypsum powder may be provided from multiple containers and/or in multiple steps and may comprise several different types of gypsum powder. The gypsum powder also is not necessarily pure gypsum powder, but may already be mixed with other additives, e.g. with any additives described herein.

Dispersing the gypsum powder in water can be achieved by any dispersing process, such as by feeding a continuous flow of gypsum powder into the flowing water, or by mixing the gypsum powder into a container filled with standing water. The mixing ratio of gypsum to water or to liquid varies for different gypsums and is adjusted so that a concentrated dispersion is produced, which is still pourable.

Simultaneously with the gypsum powder or in a next step after dispersing the gypsum powder, a foam formation system is provided. The provision of the foam formation system can take place in various ways, some of which are described below by way of example. The foam formation system may be a 2-component system or a one component system. If the foam formation system is a 2-component system one component may be the solid particulate composition and the second component may be a blowing agent. The blowing agent may be present in liquid form.

In a further step, the water-gypsum-dispersion is foamed, forming a wet foam. Foaming is achieved by the decomposition of the chemical blowing agent, such as hydrogen peroxide (H₂O₂), in the presence of the partially hydrophobized foam-stabilizing particles (b). By introducing suitable amounts of gas in this step, a dispersion containing partially hydrophobized particles is converted into a stable wet foam by adsorption of these particles to the gas-water interface.

In a further step, the wet foam sets, whereby the wet foam hardens to form the foamed gypsum body, and the stabilized air bubbles form macropores in the gypsum body.

The gypsum body is subsequently dried.

In the processing of gypsum into foamed gypsum bodies, the stability of the wet foam plays a particularly important role for quality and product safety. Only with very high wet foam stability can it be guaranteed that fluctuating cycle times and variation in the raw material quality, as can occur in production, do not lead to unintentional changes in the dimensions of the wet component, the pore structure, the microstructure or even the formation of cavities or blowholes.

To achieve a stable wet foam the foam formation system is used in the water-gypsum-dispersion, as it provides, among other effects, for the particle stabilization of the wet foam. Without being bound to this theory, stabilization is achieved as follows: Due to their partial hydrophobicity, the partially hydrophobized particles preferentially adhere to the surface of the bubbles when the whet foam is formed, i.e. at the interface between the dispersion and the gas-filled interior of the bubbles, as described above. The partially hydrophobized particles support the formation of small, homogeneously distributed gas bubbles and stabilize the formed bubbles highly efficiently. By attaching the particles to the bubbles, the free energy of the system is greatly reduced. From this and from the fact that the partially hydrophobized particles form a robust shell around the bubbles and effectively keep the interfaces between adjacent bubbles at a distance, it becomes apparent that particle-stabilized foams do not exhibit the usual decomposition processes such as dewatering, i.e. phase separation foam - dispersion, pore growth through coalescence or Ostwald ripening, or do so at a significantly slower rate.

Wet foams usually are inherently unstable, i.e. they are subject to progressive decay processes from the time they are formed. In contrast, the method according to the invention ensures such excellent control of the microstructure through the use of the foam formation system contained therein. This makes it possible for a wet foam produced with the specified density and pore size to remain reliably stable until solidification and to avoid a critical degree of dewatering, i.e. phase separation foam dispersion, or pore growth due to coalescence or Ostwald ripening. Particle-stabilized wet foams are much more stable than foams stabilized by surface-active substances such as surfactants.

It has been shown that particle-stabilized wet foams even retain their microstructure set during production for several days. This ensures that the microstructure set during foam formation does not change significantly over the duration of the downstream process steps until the porous gypsum body is finished. The properties of the foam and the pores formed by the process are also uniform over the entire body, i.e. essentially gradient-free. As a result of this high stability, reproducibility and uniformity of the foam and the resulting microstructure, the use of particle stabilization leads to exceptional porous gypsum bodies.

"Macropores", as this term is used herein, are the pores in the foam that originate from the action of a blowing agent of the foam formation system. The macropores exhibit median pore sizes > 0.030 mm and can typically be characterized by light microscopic image analysis.

First, the porosity of the gypsum board may be influenced. Total porosities of the gypsum board up to 98 vol.% may be achieved. The macropores have a volume fraction of 10 - 95 %, preferably 10 - 80 % and particularly preferably 25 - 70 %, in relation to the total volume of the gypsum body. Key parameters are the amount of blowing agent and the composition of the foam formation system.

The total porosity of the gypsum body is between 20 - 98 %, preferably 40 - 94%, more preferably 45 - 88%, and particularly preferably 60 - 80 %, in relation to the total volume of the gypsum body and assuming a true density of the gypsum, CaSO4*2H2O, of 2,320 kg/m³.

The dry density of the gypsum bodies is between 80 - 900 kg/m³, preferably 300 - 800 kg/m³, and more preferably 500 - 800 kg/m³.

Second, the type of pores may be influenced. The gypsum bodies may show predominantly open pore structure or predominantly closed-pore structure. Key parameter is the amount and composition of the foam formation system.

Third, pore size distribution may be influenced. Typically, the end use aims for a narrow and homogeneous size distribution. This is an inherent property provided by the use of the water-gypsum-dispersion according to the invention using the foam formation system.

The size of the macropores can be influenced by selecting the mixing ratio of the foam formation system and the gypsum suspension as well as of the components of the foam formation system, optionally further additives, and the conditions under which the wet foam is formed. Generally, smaller pores are formed with increasing concentration of partially hydrophobized particles (b) in the gypsum suspension and with partially hydrophobized particles (b) with increasing concentration of amphiphilic molecules (b.2) being adsorbed to the particles (b.1). In addition, the diameter of the pores can be reduced if formulations of higher viscosity are foamed. In this way, a median diameter of the macropores between 0.1 mm and 5 mm can be set in a controlled manner.

The term "median pore size d50" (of the macropores as defined herein) is given in mm. The median pore size value of a foam is determined by optical image analysis. Cross-sectional images of pore structures are analyzed applying the linear intercept method using the software Lince, Linear Intercept (TU, Darmstadt, Germany). A given d50 value means that 50% of the pores are smaller than or equal to that value. A "d10"-value, for instance, means that 10% of the pores are smaller than or equal to that value and a "d90"-value means that 90% of the pores are smaller than or equal to that value. The span of the (macro)pore size distribution, "Sp" is defined by the following equation: Sp = (d90 - d10)/d50.

The median size of the macropores d50 of the gypsum body is 0.10 - 2.00 mm, preferably 0.10 - 1.00 mm, more preferably 0.15 - 0.80 mm, and particularly preferably 0.18 - 0.60 mm. According to one aspect, the size of the macropores is influenced by the choice of the mixing ratio of the components mentioned herein, for example of the components of the foam formation system, optionally further additives, as well as the conditions during the formation of the wet foam. The span of the macropore size distribution Sp is 0.5 - 2.5, preferably 0.5 - 2.0, more preferably 0.8-2.0 and particularly preferably 0.8 - 1.6.

The porosity and thus the density of the material are defined by the concentration of blowing agent. This statement is only true under the prerequisite of an effective bubble stabilization by the foam formation system that ensures an essentially 100% capture and stabilization of the released gas in the suspension. In particular, the porosity and thus the density of the gypsum body are defined by the concentration of blowing agent if the bubble stabilization by the partially hydrophobized particles that are part of the foam formation system is effective. If the partially hydrophobized particles are well engineered and therefore effective in stabilizing gas - water interface, an essentially 100% capture and stabilization of the released gas is ensured in the water-gypsum-dispersion during decomposition of the blowing agent.

According to one aspect, the size of the macropores is influenced by the choice of the mixing ratio of the components mentioned herein, optionally further additives, as well as the conditions during the formation of the wet foam.

The porosity and thus the density of the material are defined by the concentration of blowing agent.

The three point bending strength of the foamed gypsum body is preferably 0.5 - 15.0 MPa, more preferably 0.5 - 10.0 MPa, even more preferably 0.5 - 7.0 MPa, particularly preferably 1 - 5 MPa, and alternatively 0.5 - 3.0 MPa.

The compressive strength of the foamed gypsum body is preferably 1 - 20 MPa, more preferably 1 - 15 MPa, even more preferably 1 - 10 MPa, particularly preferably 1 - 7 MPa, and alternatively 1 - 4 MPa.

### Use

In another aspect the invention relates to a use of a water-gypsum-dispersion according to the invention for the production of a foamed gypsum body, preferably for the production of gypsum cores and plaster boards and wall elements.

### Examples

### Preparation of the partially hydrophobized particles

A 1000 mL LD-PE bottle was provided, filled up to 30% of its volume with 15 mm diameter alumina spheres for supporting the blending process. The particles (b.1) were filled in the bottle, the amphiphilic molecules (b.2) were added on top of the powder. The bottle was then rolled for 18 h to obtain a homogeneous blend. The partially hydrophobized particles were then separated from the balls using a polymer sieve.

### Providing the foam formation system

The partially hydrophobized particles (b) were filled into a container, the catalytically active particles (a), the 1^{st} catalyst and 2^{nd} co-catalyst, were added. The blowing agent was weighed into a separate container. The foam formation system of these examples was provided as a 2-component system.

### Preparation of the water-gypsum-dispersion and the porous gypsum body

The gypsum raw material was compounded with the first component of the foam formation system, solid particulate composition, namely the partially hydrophobized particles (b) and the catalytically active particles (a). Water was given to a mixing vessel, and the gypsum compound was added. Under thorough mixing, a homogeneous dispersion was obtained. Thereafter, the second component of the foam formation system, the blowing agent, was admixed and homogenized for 6 seconds. Immediately after homogenization, the dispersion was poured into a mold where the foam expansion evolved until the hydrogen peroxide was entirely decomposed. Typically, in such lab scale batch experiments, the setting reaction started 4 - 8 min and ended 30 to 60 min after addition of the blowing agent. After setting, the foam was demolded and dried to constant weight at 40°C to obtain the foamed gypsum body.

**Table 1: Formulations of water-gypsum-dispersions, examples 1 to 6**

| | **Comp. -Ex1** | **Ex2** | **Ex3** | **Ex4** | **Ex5** | **Ex6** |
|---|---|---|---|---|---|---|
| Amphiphilic molecule (b.2), type | NA | NA | OA | DA | SDS | CTAB |

| **Partially hydrophobized particles** | (%) | (%) | (%) | (%) | (%) | (%) |
|---|---|---|---|---|---|---|
| Particles (b.1), Precarb 100 (Schaefer Kalk) | 99.50 | 99.50 | 98.25 | 98.93 | 98.22 | 97.76 |
| Amphiphilic molecule (b.2) | 0.50 | 0.50 | 1.75 | 1.07 | 1.78 | 2.24 |
| Total | 100.00 | 100.00 | 100.00 | 100.00 | 100.00 | 100.00 |
| | | | | | | |
| | | | | | | |

| **Foam formation system** | (%) | (%) | (%) | (%) | (%) | (%) |
|---|---|---|---|---|---|---|
| 1st catalyst, MnO₂ | 8.63 | 5.77 | 5.86 | 5.81 | 5.82 | 5.75 |
| 2nd co-catalyst, KMnO₄ | 2.54 | 1.70 | 1.72 | 1.71 | 1.71 | 1.69 |
| Partially hydrophobized particles | 88.83 | 59.40 | 58.79 | 59.12 | 59.02 | 59.55 |
| Blowing agent, H₂O₂, 50% solution | 0.00 | 33.13 | 33.63 | 33.36 | 33.45 | 33.02 |
| Total | 100.00 | 100.00 | 100.00 | 100.00 | 100.00 | 100.00 |
| | | | | | | |
| | | | | | | |

| **Water-gypsum-dispersion** | (%) | (%) | (%) | (%) | (%) | (%) |
|---|---|---|---|---|---|---|
| Gypsum, β-hemihydrate | 60.11 | 60.04 | 60.05 | 60.04 | 60.04 | 60.03 |
| Foam formation System | 0.50 | 0.74 | 0.73 | 0.74 | 0.74 | 0.74 |
| Water | 39.39 | 39.22 | 39.22 | 39.22 | 39.22 | 39.22 |
| Total | 100.00 | 100.00 | 100.00 | 100.00 | 100.00 | 100.00 |

| | | | | | | |
|---|---|---|---|---|---|---|
| NA.. nonanoic acid; OA.. oleic acid, DA.. decanoic acid, SDS.. sodium dodecyl sulfate, CTAB.. N,N,N-Trimethylhexadecan-1-aminium bromide | | | | | | |

**Table 2: Properties of gypsum bodies formed from water-gypsum-dispersions according to Table 1**

| | **Comp. Ex1** | **Ex2** | **Ex3** | **Ex4** | **Ex5** | **Ex6** |
|---|---|---|---|---|---|---|
| **Results** | | | | | | |
| Dry total porosity (vol%) | 53.2 | 70.5 | 70.5 | 71.8 | 70.5 | 70.5 |
| Dry density (kg/m³) | 1086 | 685 | 683 | 655 | 685 | 684 |
| Pore size d10 (mm) | | 0.185 | 0.198 | 0.201 | 0.080 | 0.165 |
| Pore size d50 (mm) | | 0.623 | 0.533 | 0.549 | 0.188 | 0.281 |
| Pore size d90 (mm) | | 1.002 | 0.813 | 1.005 | 0.360 | 0.438 |
| Span pore size distribution (-) | | 1.31 | 1.15 | 1.46 | 1.50 | 0.97 |
| Bending strength (MPa) | 5.6 | 2.2 | 2.0 | 2.0 | 2.3 | 2.2 |
| Compressive strength (MPa) | 6.2 | 3.2 | 3.1 | 3.2 | 3.1 | 3.4 |

Comparative Example 1 (Comp Ex. 1) is not according to the invention. Its formulation does not include a blowing agent, just catalytically active particles and partially hydrophobized particles. Accordingly, no macropores, no foam is formed during processing. Thus, no macro pore size can be determined. The resulting sample exhibits a dry density of 1086 kg/m³. Given a true density of gypsum of 2320 kg/m³, the total porosity is 53.2 vol%.

Example 2 (Ex2) is a reference comprising a foam formation system according to the invention. During processing, the blowing agent is decomposed and forms a gas in-situ in the suspension. Because of the presence of partially hydrophobized particles, the bubbles are effectively stabilized, and a foam is formed. The reference is formulated with a foam formation system comprising partially hydrophobized particles that are known to stabilize bubbles very effectively to assure that close to 100% of the volume of liberated gas is captured in the suspension to form a foam. The partially hydrophobized particles (b) are prepared from Precarb 100 calcium carbonate particles (b.1), the surface of which is partially hydrophobized using 0.5% of nonanoic acid as amphiphilic molecules (b.2). The resulting sample exhibits a dry density of 685 kg/m³ corresponding to a total porosity of 70.5 vol%. The median pore size of the macropores is 0.623 mm.

In Examples 3 - 6 (Ex3 - Ex6) that are designed according to the invention, different amphiphilic molecules (2.b) as listed in Table 1 are used to prepare partially hydrophobized particles. The data summarized in Table 2 show that the total porosities and the densities of Examples 3 - 6 coincide well with the respective numbers of reference Example 2, proving the effectiveness of the respective partially hydrophobized particles (b) in stabilizing gas. However, the type of amphiphilic molecule used may impact the size of the macropores (see Table 2). Examples 3, 4 exhibit median pore sizes > 0.5 mm whereas Examples 5, 6 show median pore sizes < 0.3 mm. The bending and compressive strength values of Examples 3 - 6 are comparable to the ones of reference Example 2 (see Table 2).

## Claims

1. Water-gypsum-dispersion comprising
- 50 - 75 % by wt. gypsum,
- a foam formation system comprising a solid particulate composition and at least one chemical blowing agent,
- water,
- optionally one or more additives, and
wherein the gypsum particles and the solid particulate composition are dispersed in the water, wherein the solid particulate composition comprises
(a) catalytically active particles, and
(b) partially hydrophobized particles,
wherein the catalytically active particles are selected to react with the chemical blowing agent to form a gas, and
- wherein the partially hydrophobized particles (b) are selected from the group consisting of oxides, hydroxides, carbides, nitrides, phosphates, carbonates, silicates (b.1), and
- wherein the partially hydrophobized particles (b) are obtained by modifying the surface of particles (b.1) with amphiphilic molecules (b.2) comprising at least a head group and a tail group, and the amount of amphiphilic molecules (b.2) on the particles (b.1) is in the range of 0.5 - 160 µmol (b.2) / m² particle (b.1),
wherein the amount of the partially hydrophobized particles (b) in the solid particulate composition is in the range of 20.0-99.8% and/or the amount of the catalytically active particles (a) is in the range of 0.2-80%,
**characterized in that**
- the tail group of the amphiphilic molecules (b.2) is selected from saturated and unsaturated aliphatic groups having 2 to 18 carbon atoms, preferably 8 to 18 carbon atoms, particularly preferably 9 to 17 carbon atoms, and
- the head group of the amphiphilic molecules (b.2) is selected from sulfates, and carboxylic acids, and quaternary ammonium compounds, and sulfate salts, and carboxylic acid salts.

2. Water-gypsum-dispersion according to claim 1, **characterized in that** the amphiphilic molecules (b.2) are selected from saturated or monounsaturated fatty acids having 10 to 18 carbon atoms, fatty acid salts having 10 to 18 carbon atoms and alkyl sulfate salts having an aliphatic alkyl group with 8 to 18 carbon atoms, preferably sodium alkyl sulfates, potassium alkyl sulfates and ammonium alkyl sulfates.

3. Water-gypsum-dispersion according to claim 1 or 2 **characterized in that** the amphiphilic molecules (b.2) are selected from oleic acid, sodium oleate, sodium lauryl sulfate, sodium lauryl ether sulfate, sodium lauryl monoether sulfate, decanoic acid, undecanoic acid, dodecanoic acid, hexadecenoic acid and octadecanoic acid, preferably from oleic acid, sodium oleate, sodium lauryl sulfate, sodium lauryl ether sulfate, sodium lauryl monoether sulfate, hexadecenoic acid and octadecanoic acid, most preferably oleic acid, hexadecenoic acid and octadecanoic acid.

4. Water-gypsum-dispersion according to any one of the preceding claims, **characterized in that** the catalytically active particles (a) are selected from the group consisting of metal oxides, metal hydroxides, metal carbonates, metal salts, enzymes or a mixture thereof selected from the group consisting of manganese oxides, iron oxides, alkali metal manganates, permanganates, alkali metal halides, enzymes and mixtures thereof.

5. Water-gypsum-dispersion according to any one of the preceding claims, **characterized in that** the catalytically active particles (a) are selected from manganese oxide, either synthetically produced MnO₂ or naturally occurring mineral MnO₂, manganite MnO(OH), potassium manganese (VII) compounds, sodium manganese (VII) compounds, calcium manganese (VII) compounds and mixtures thereof.

6. Water-gypsum-dispersion according to any one of the claims 1 or 4, **characterized in that** the catalytically active particles (a) are a mixture of a first catalyst with a second co-catalyst, wherein the first catalyst is a metal oxide, a metal hydroxide, a metal carbonate, a metal salt, an enzyme or a mixture thereof selected from the group consisting of manganese oxides, enzymes and mixtures thereof, and the second co-catalyst is selected from the group consisting of permanganates, alkali metal halides, enzymes and mixtures thereof and the co-catalyst is present in an amount of 0.5 % by wt. to 80.0 % by wt. based on the total amount of the catalytically active particles; and the first catalyst is different from the second catalyst.

7. Water-gypsum-dispersion according to any one of the preceding claims, **characterized in that** the blowing agent is selected from hydrogen peroxide, peroxo compounds which release oxygen in the presence of a catalyst, alkali metal peroxides, alkaline earth metal peroxides, carbonates and hydrogen carbonates, preferably selected from hydrogen peroxide, sodium carbonate and sodium hydrogen carbonate.

8. Water-gypsum-dispersion according to any one of the preceding claims, **characterized in that** the dispersion comprises one or more additives, and the additives are selected from the group consisting of pH adjusting agents, additives for mechanical reinforcement, fire retardants, dispersing agents, additives against positive or negative thermal expansion, additives to delay or accelerate the setting reaction and/or additives to reduce the setting expansion of gypsum.

9. Water-gypsum-dispersion according to any one of the preceding claims consisting of
- 50 - 75 % by wt. of gypsum,
- a foam formation system comprising the particulate composition, and at least one blowing agent,
- water,
- optionally one or more additives,
wherein the components add up to 100 % by wt..

10. Method for producing a gypsum body comprising the steps of
- preparing a water-gypsum-dispersion according to any one of the preceding claims by mixing in arbitrary order calcined gypsum with water, a foam formation system and optionally additives,
- casting the water-gypsum-dispersion on a conveyor-belt or casting the water-gypsum-dispersion in a hollow mold,
- hardening the water-gypsum-dispersion to a gypsum body on the conveyor belt or in the hollow mold, and
- drying the gypsum body.

11. Method according to claim 10, **characterized in that** the gypsum body has macropores and the median size of the macropores d50 of the gypsum body is 0.10 to 2.00 mm.

12. Use of a water-gypsum-dispersion according to any one of the preceding claims 1 to 9 for the production of a foamed gypsum body, preferably for the production of gypsum cores and plaster boards and wall elements.
